# EUROPÄISCHE PATENTSCHRIFT

(11) **EP 0 670 949 B1**
(45) Veröffentlichungstag und Bekanntmachung des Hinweises auf die Patenterteilung: **26.08.1998**
(21) Anmeldenummer: 93924066.9
(22) Anmeldetag: 28.10.1993
(51) Int. Cl.: E06B 9/90, F16D 55/48

(54) **ROLLOANTRIEB**
WINDOW SHADE DRIVE
ENTRAINEMENT DE STORES

(30) Priorität: 25.11.1992 DE 4239507
(43) Veröffentlichungstag der Anmeldung: 13.09.1995
(73) Patentinhaber: BENTHIN AKTIENGESELLSCHAFT, 27570 Bremerhaven (DE)
(72) Erfinder: BENTHIN, Siegfried, D-27554 Bremerhaven (DE)
(74) Vertreter: von Ahsen, Erwin-Detlef
(86) Internationale Anmeldenummer: EP9302988
(87) Internationale Veröffentlichungsnummer: WO9412758

(56) Entgegenhaltungen:
- WO-A-83/01809
- WO-A-91/03619
- US-A- 5 067 541

## Beschreibung

Die Erfindung bezieht sich auf einen Rolloantrieb mit Gattungsmerkmalen nach dem Oberbegriff des Patentanspruches 1.

Ein Rolloantrieb mit diesen Gattungsmerkmalen ist aus WO 91/03619 bekannt. Die Bremsscheiben werden bei dieser bekannten Anordnung durch eine, bezogen auf die Achse der Wickelwelle, axial wirksame Schraubenfeder gegeneinander gedrückt, um Reibungskräfte zu erzeugen, die größer sind als das Gewicht des nahezu abgewickelten Behanges. Für die Überwindung der Reibung ist zwischen einem Antriebsrad und der Wickelwelle eine Axialkurve ausgebildet, über die entsprechend große Axialkräfte zur Überwindung der Federspannung aufzubringen sind und die sich bei der Rollobetätigung unerwünscht bemerkbar machen.

In der US 4,433,765 ist ein Rolloantrieb offenbart, bei dem mehrere, radial spannende Federn zwischen zwei koaxial montierten, zylindrischen Elementen angeordnet sind und selbsttätig eine Kupplung zwischen einem Antriebsglied und einem festen Bauteil bewirken, so daß die Kupplung durch Verdrehung eines Antriebsorgans gelöst werden kann.

Es ist Aufgabe der Erfindung, einen Rolloantrieb nach dem Gattungsbegriff aus möglichst einfachen Bauteilen auszubilden, bei der die Haltekraft sich durch das Behanggewicht verstärkt und welcher leichtgängig (mit geringem Kraftaufwand) zu betätigen ist.

Diese Aufgabe löst die Erfindung durch eine Ausbildung mit Merkmalen nach dem Kennzeichen des Patentanspruches 1.

Wesentlich ist die Wirkung der Kupplungselemente in Verbindung mit der Wirkung der Reibscheiben, wobei deren axiale Kupplungskräfte durch eine relativ schwach ausgelegte Drehmomentenfeder oder dergleichen in der Weise ausgelöst werden, daß das Gewicht des herabhängenden Behangs zwangsläufig zu einer Verstärkung der axialen Kupplungskräfte zwischen den einzelnen Reibscheiben führt. Ein Rolloantrieb mit den Erfindungsmerkmalen ist daher in besonderer Weise für große Behanggewichte geeignet, weil er unabhängig von dem Behanggewicht nur geringe Kräfte für seine Betätigung erfordert.

Auf der Zeichnung sind mehrere Ausführungsbeispiele in einer erfindungsgemäßen Ausbildung jeweils in einem durch eine Achsebene der Wickelwelle eines Rollos gelegten Längsschnitt dargestellt.

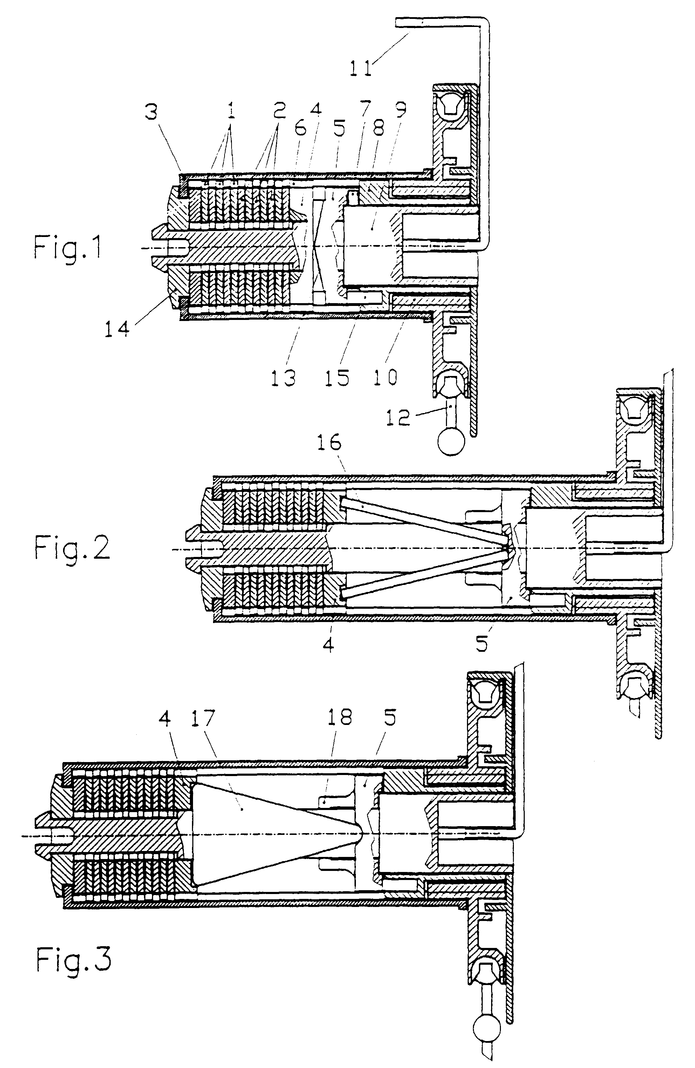

Die Figuren 1, 2 und 3 zeigen unterschiedliche Ausbildungen der Bauteile zur Umsetzung von Antriebskräften in axiale Kupplungskräfte auf die Reibscheiben.

Der Rolloantrieb ist an einem Rolloende eingebaut und über eine Kugelkette 12, einen Schnurzug oder dergleichen betätigbar. Die Kugelkette 12 ist über ein Kettenrad 10 gelegt, welches drehfest mit einem Antriebsorgan 8 verbunden ist. Dieses Antriebsorgan 8 ist drehbar auf einem ortsfest verankerten Zapfen 9 gelagert, welcher konzentrisch in einer als Abtriebsglied dienenden Hülse oder unmittelbar in der Wickelwelle 3 angeordnet ist. Der Zapfen 9 ist mittels eines Wandhalters 11 oder dergleichen befestigbar. Gegen eine Abstufung des festen Bauteiles 9 stützt sich ein Kupplungselement 5 in der Form einer Scheibe ab, welches mit einem axial verschieblich und drehbar auf dem festen Bauteil 9 gelagerten Kupplungselement 4, ebenfalls in Form einer Scheibe, zusammenwirkt. Das Kupplungselement 5 greift mit einem Zapfen 15 in eine segmentförmige Ausnehmung des Antriebsorgans 8 ein, so daß das Kupplungselement 5 und das Antriebsorgan 8 in einem durch diese Ausnehmung bestimmten Drehwinkel relativ zueinander beweglich sind. Durch eine schwache Drehmoment feder 7 wird ständig ein geringes Moment als Haltekraft auf das Kupplungselement 5 ausgeübt, so daß der Zapfen 15 sich an einem Ende der segmentförmigen Ausnehmung befindet. Das Kupplungselement 4 bildet eine Endscheibe eines Pakets aus mehreren Reibscheiben 1 und 2, die mit Reibflächen an ihren jeweiligen Stirnseiten eng aneinanderliegen. Die Reibscheiben 1 und 2 sind abwechselnd so angeordnet, daß die Reibscheiben 1 drehfest mit der Wickelwelle 3 und die Reibscheiben 2 drehfest mit dem ortsfesten Zapfen 9 verbunden sind. Die Verbindungen der Reibscheiben 1 mit der Wickelwelle 3 und der Reibscheiben 2 mit dem festen Zapfen 9 sind jedoch axial verschiebbar. Auf dem gegenüberliegenden Ende stützt sich das Paket aus den Reibscheiben 1 und 2 gegen ein fest auf dem Zapfen 9 angeordnetes Drucklager 14 ab. Zwischen den beiden koaxial auf dem Zapfen 9 angeordneten Kupplungselementen 4 und 5 sind Mittel vorgesehen, durch die bei Verdrehung der Kupplungselemente 4 und 5 relativ zueinander Axialkräfte auf das Paket aus den Reibscheiben 1 und 2 wirksam werden. In beiden Drehrichtungen werden diese Axialkräfte durch das von der Feder 7 ausgehende Moment initiiert. Bei Verdrehung des Kupplungselementes 4 in der Gegenrichtung durch das auf das Antriebsglied 8 ausgeübte Drehmoment durch den herabhängenden Behang werden entsprechende Axialkräfte ausgelöst, die das Senken und Abwickeln des Behangs verhindern. Beim Heben des Behangs, also beim Aufwickeln auf die Wickelwelle 3, wird die Bremskraft durch Synchronisation der Reibscheiben 1 und 2 sowie der beiden Kupplungselemente 4 und 5 und damit Wegnahme der Axialkraft ausgeschaltet. Beim Heben des Behangs muß daher nur das Behanggewicht und die relativ geringe, von der Feder 7 ausgehende Servokraft überwunden werden. Beim Senken des Behangs ist dagegen nur die von der Feder 7 ausgehende Servokraft und die Reibung des Kupplungselements 5 zu überwinden. Die Reibkraft der Reibscheiben 1 und 2 wird durch das Behanggewicht nach dem Verringern des axialen Druckes überwunden. Dadurch ist ein gleichbleibend leichtes Bedienen auch bei schwerem Behang gegeben. In der Ruhestellung wird durch die geringe Kraft der Feder 7 eine hohe Haltekraft erzeugt. Die von der Feder 7 ausgehende Servokraft hat dann lediglich eine Sicherheitsfunktion.

Die Umsetzung von Antriebskräften in Axialkräfte zwischen den Kupplungselementen 5 und 4 erfolgt bei dem Ausführungsbeispiel entsprechend Figur 1 durch Kurvenflächen 13 an beiden scheibenförmigen Kupplungselementen 4 und 5, die sich gegenseitig berühren, so daß durch Verdrehung der beiden Kupplungselemente 4 und 5 relativ zueinander Axialkräfte auf das Paket aus Reibscheiben 1 und 2 wirksam werden.

Bei der Anordnung entsprechend Figur 2 sind zwischen den Kupplungselementen 4 und 5 Zylinderstifte 16 in der Weise angeordnet, daß ihre Längsachse mit der Längsachse des Rollos einen Winkel einschließen, wodurch bei Verdrehung der Kupplungselemente 4 und 5 relativ zueinander ebenfalls Axialkräfte ausgelöst werden.

Eine gleichartige Wirkung kann auch durch Einlegekeile 17 erreicht werden, die sich beispielsweise mit der Keilspitze gegen das Kupplungselement 5 und mit dem gegenüberliegenden Ende gegen das Kupplungselement 4 abstützen. Auch in diesem Falle wird bei einer Verdrehung der Kupplungselemente 4 und 5 relativ zueinander eine axiale Kraftkomponente gegen das Kupplungselement 4 und damit auf das Reibscheibenpaket wirksam.

Abweichend von der Anordnung einer Drehmomentfeder 7 gemäß dem Beispiel in Figur 1 ist in den Beispielen der Figuren 2 und 3 anstelle einer solchen Drehmomentfeder eine feste Bremse 18 mit relativ geringer Bremskraft für das Kupplungselement 5 vorgesehen, die dessen Drehbewegung auf dem festen Zapfen 9 innerhalb des durch den Zapfen 15 in der Ausnehmung festgelegten Drehwinkelbereichs behindert. Dadurch wird bei Verdrehung des Kupplungselementes 4 durch das Behanggewicht eine Verkantung der Zylinderstifte 16 bzw. der Keilstücke 17 erreicht, so daß eine Axialkraft auf das Paket aus Reibscheiben 1 und 2 wirksam wird.

### BEZUGSZEICHENLISTE:

- 1: Reibscheibe
- 2: Reibscheibe
- 3: Wickelwelle
- 4: Kupplungselement
- 5: Kupplungselement
- 6: Mitnehmerzapfen
- 7: Drehmomentfeder
- 8: Antriebsorgan
- 9: Zapfen
- 10: Kettenrad
- 11: Wandhalter
- 12: Kugelkette
- 13: Axialkurve
- 14: Drucklager
- 15: Mitnehmerzapfen
- 16: Zylinderstift
- 17: Keilstück
- 18: Bremse

## Patentansprüche

1. Rolloantrieb mit einem drehbar gelagerten Antriebsorgan (10) und mit einem zwischen einer Wickelwelle (3) und einem ortsfesten Zapfen (9) angeordneten Paket aus mehreren, abwechselnd drehfest entweder mit der Wickelwelle (3) oder mit dem Zapfen (9) verbundenen, axial jedoch beweglich angeordneten Reibscheiben (1,2), wobei eine relative Drehbewegung des Antriebsorgans (10) gegenüber der Wickelwelle (3) eine Reibschlußverbindung der Reibscheiben (1,2) aufhebt, dadurch gekennzeichnet, daß zwischen dem Paket aus den Reibscheiben (1,2) und dem Antriebsorgan (10) zwei axial auf dem Zapfen (9) bewegliche Kupplungselemente (4,5) vorgesehen sind, von denen ein Kupplungselement (5) innerhalb eines vorgegebenen Winkelbereichs drehbeweglich mit dem Antriebsorgan (10) verbunden und durch ein ein Drehmoment als Haltekraft ausübendes Glied (7,18) belastet ist, während das andere Kupplungselement (4) an einer mit der Wickelwelle (3) drehfest verbundenen Endscheibe des Reibscheibenpakets ausgebildet ist, wobei eine Drehbewegung beider Kupplungselemente (4,5) relativ zueinander Axialkräfte auf die Reibscheiben (1,2) bewirkt.

2. Rolloantrieb nach Anspruch 1, dadurch gekennzeichnet, daß die zwischen den beiden Kupplungselementen (4,5) axial wirksamen Mittel bei einer Verdrehung der Kupplungselemente relativ zueinander ihre wirksame axiale Länge vergrößern und dadurch die Kupplungselemente axial auseinanderdrücken.

3. Rolloantrieb nach Anspruch 2, dadurch gekennzeichnet, daß an sich gegenseitig berührenden Flächen der beiden Kupplungselemente (4,5) axial ansteigende Kurven (13) ausgebildet sind.

4. Rolloantrieb nach Anspruch 2, dadurch gekennzeichnet, daß die zwischen den beiden Kupplungselementen (4,5) axial wirksamen Mittel aus Kippelementen bestehen, deren Abstützung an den Kupplungselementen einen unterschiedlichen Abstand von der Längsachse des Zapfens (9) aufweist.

5. Rolloantrieb nach Anspruch 4, dadurch gekennzeichnet, daß die Kippelemente aus Zylinderstiften (16) bestehen, die mit ihrer Längsachse winklig zur Längsachse des Zapfens (9) angeordnet sind.

6. Rolloantrieb nach Anspruch 4, dadurch gekennzeichnet, daß Keilstücke (16) Verwendung finden, die sich mit der Keilspitze an dem einen Kupplungselement (5) und mit dem anderen Ende an dem anderen Kupplungselement (4) abstützen.

7. Rolloantrieb nach einem der Ansprüche 1 bis 6, dadurch gekennzeichnet, daß das ein Drehmoment als Haltekraft auf das Kupplungselement (5) ausübende Glied eine schwache Drehmomentfeder (7) ist.

8. Rolloantrieb nach einem der Ansprüche 1 bis 6, dadurch gekennzeichnet, daß das ein Drehmoment als Haltekraft auf das Kupplungselement (5) ausübende Glied eine Bremse (18) mit relativ geringer Bremskraft ist.

## Claims

1. Roller blind drive with a rotatably mounted drive part (10) and with a pack, disposed between a winding shaft (3) and a stationary pin (9), of a plurality of friction discs (1, 2), which are connected alternately in a non-rotatable manner either to the winding shaft (3) or to the pin (9), yet are disposed so as to be axially mobile, wherein a relative rotational movement of the drive part (10) with respect to the winding shaft (3) terminates a frictional engagement of the friction discs (1, 2), characterised in that two coupling elements (4, 5), which can move axially on the pin (9), are provided between the pack of the friction discs (1, 2) and the drive part (10), one coupling element (5) of which is connected to the drive part (10) such that it can rotate within a predetermined angular range and is loaded by a member (7, 18) exerting a torque as a holding force, while the other coupling element (4) is formed at an end disc of the friction disc pack which is non-rotatably connected to the winding shaft (3), wherein a rotational movement of both coupling elements (4, 5) relative to one another causes axial forces to act on the friction discs (1, 2).

2. Roller blind drive according to claim 1, characterised in that the means acting axially between the two coupling elements (4, 5) increase their effective axial length when the coupling elements are turned relative to one another and as a result push the coupling elements apart axially.

3. Roller blind drive according to claim 2, characterised in that axially rising cams (13) are formed at mutually contacting surfaces of the two coupling elements (4, 5).

4. Roller blind drive according to claim 2, characterised in that the means which act axially between the two coupling elements (4, 5) consist of tilting elements which are supported at the coupling elements at a varying distance from the longitudinal axis of the pin (9).

5. Roller blind drive according to claim 4, characterised in that the tilting elements consist of cylindrical pegs (16) which are disposed with their longitudinal axis at an angle to the longitudinal axis of the pin (9).

6. Roller blind drive according to claim 4, characterised in that key pieces (16) are used which are supported with the key tip at one coupling element (5) and with the other end at the other coupling element (4).

7. Roller blind drive according to one of claims 1 to 6, characterised in that the member exerting a torque as a holding force on the coupling element (5) is a weak torque spring (7).

8. Roller blind drive according to one of claims 1 to 6, characterised in that the member exerting a torque as a holding force on the coupling element (5) is a brake (18) with a relatively low braking force.

## Revendications

1. Dispositif d'entraînement de store comportant un organe d'entraînement (10) monté de manière à pouvoir tourner et un paquet, installé entre un arbre d'enroulement (3) et un embout fixe (9), de plusieurs disques de frottement (1,2), qui sont reliés alternativement avec blocage en rotation à l'arbre d'enroulement (3) ou à l'embout (9), mais sont disposés de manière à être déplaçables axialement, un mouvement de rotation relative de l'organe d'entraînement (10) par rapport à l'arbre d'enroulement (3) supprimant une liaison par frottement entre les disques de frottement (1,2), caractérisé en ce qu'entre le paquet des disques de frottement (1,2) et l'organe d'entraînement (10) sont disposés deux éléments d'accouplement (4,5), qui sont déplaçables axialement sur l'embout (9) et parmi lesquels un élément d'accouplement (5) est relié à l'organe d'entraînement (10), de manière à pouvoir tourner sur une plage angulaire prédéterminée, et est chargé par un organe (7,18) appliquant un couple sous la forme d'une force de retenue, tandis que l'autre élément d'accouplement (4) est agencé sous la forme d'un disque final du paquet de disques de frottement, qui est relié avec blocage en rotation à l'arbre d'enroulement (3), un mouvement de rotation relative des deux éléments d'accouplement (4,5) provoquant l'application de forces axiales aux disques de frottement (1,2).

2. Dispositif d'entraînement de store selon la revendication 1, caractérisé en ce que les moyens, qui agissent axialement entre les deux éléments d'accouplement (4,5), augmentent la longueur axiale active des éléments d'accouplement lors d'une rotation relative de ces derniers et de ce fait écartent axialement les éléments d'accouplement.

3. Dispositif d'entraînement de store selon la revendication 2, caractérisé en ce que des cames (13) disposées de manière à faire saillie axialement, sont formées sur des surfaces, qui se touchent, des deux éléments d'accouplement (4,5).

4. Dispositif d'entraînement de store selon la revendication 2, caractérisé en ce que les moyens, qui agissent axialement entre les deux éléments d'accouplement (4,5), sont constitués d'éléments basculants, dont l'appui sur les éléments d'accouplement est séparé de l'axe longitudinal de l'embout (9) par une distance différente.

5. Dispositif d'entraînement de store selon la revendication 4, caractérisé en ce que les éléments basculants sont constitués par des broches cylindriques (16), qui sont disposées de telle sorte que leur axe longitudinal est incliné par rapport à l'axe longitudinal de l'embout (9).

6. Dispositif d'entraînement de store selon la revendication 4, caractérisé en ce qu'on utilise des éléments en coin (16) qui prennent appui avec la pointe du coin sur un élément d'accouplement (5) et, par l'autre extrémité, sur l'autre élément d'accouplement (4).

7. Dispositif d'entraînement de store selon l'une des revendications 1 à 6, caractérisé en ce que l'élément, qui exerce un couple en tant que force de retenue sur l'élément d'accouplement (5), est un ressort faible (7) d'application d'un couple.

8. Dispositif d'entraînement de store selon l'une des revendications 1 à 6, caractérisé en ce que l'élément, qui applique un couple en tant que force de retenue à l'élément d'accouplement (5), est un frein (18) possédant une force de freinage relativement faible.
